# EUROPEAN PATENT SPECIFICATION

(11) **EP 3 854 981 B1**
(45) Date of publication and mention of the grant of the patent: **12.11.2025**
(21) Application number: 21153857.4
(22) Date of filing: 27.01.2021
(51) Int. Cl.: E06B 3/62, B29D 99/00

(54) **A COMPOSITE GASKET**
KOMPOSITDICHTUNG
JOINT COMPOSITE

(30) Priority: 27.01.2020 GB 202001091
(43) Date of publication of application: 28.07.2021
(73) Proprietor: Garner Aluminium Extrusions Limited, Derbyshire DE56 2JJ (GB)
(72) Inventor: PARRY, Philip Dayton, Derby, Derbyshire DE5 8LE (GB)
(74) Representative: Foot, Paul Matthew James

(56) References cited:
- DE-A1- 19 712 778
- JP-A- 2001 020 622
- JP-A- 2002 155 672
- US-A- 2 102 658

## Description

### FIELD

The present teachings relate to a composite gasket comprising two or more gaskets for a window frame assembly, in particular, where the gasket is a continuous gasket that can be arranged to provide a seal between a glazing unit and two or more window frame members.

### BACKGROUND

Typical fenestration units are assembled as a glazing unit comprising one or more panes of glass held by abutments of a structured window frame at the borders of the glazing unit. In order to retain, insulate and seal the fenestration unit, a gasket is usually provided between the borders of the glazing unit and the window frame members.

It is common for a window frame gasket to take the form of a thin strip of material. In order to provide a seal between all the borders of a glazing unit and the window frame members, it is common for a separate gasket strip to be required for each border of the glazing unit. For example, a typical fenestration unit will comprise a glazing unit having four straight borders and two faces, which will require eight gaskets; one gasket for each border and each face of the glazing unit. However, this is disadvantageous since there is a risk that the corners of the glazing unit will not be adequately sealed due to inaccurate measurement of the required lengths, shrinkage of the gasket due to temperature and other effects. This may compromise the thermal insulation properties and water-tightness of the fenestration unit.

Alternatively, it is also known in the art to use a single gasket strip to provide a seal between all borders on one face of a glazing unit and the window frame members. Commonly, the single gasket strip is provided along each straight border of the glazing unit and has to be folded onto its self at the corners of the glazing unit in order for lengths of the gasket strip to be orientated at different angles relative to each other. However, this is also disadvantageous since the thickness of the gasket at the corners of the glazing unit is increased compared to the gasket along the borders of the glazing unit. This uneven gasket thickness may result in gaps between the window frame members, the gasket and the glazing unit, which may also cause the fenestration unit to have poor thermal insulation and sealing properties. Such a gasket is known e.g. from JP 2001 020622 A.

The present teachings seek to overcome, or at least mitigate the problems of the prior art.

### SUMMARY OF THE INVENTION

According to the present invention, there is provided a composite gasket and a method of manufacturing a composite gasket as defined in claims 1 and 12 respectively.

Advantageously, the region of reduced cross-sectional area allows the two portions to cover at least two borders of a glazing unit without the gasket having to be folded onto its self at a corner of the glazing unit, which causes doubling of the material at the corner. This allows for a uniform gasket thickness around the glazing unit to allow for better sealing.

Each portion may have a constant cross-sectional profile along an extrusion axis of the gasket.

This simplifies manufacture of the gasket since the gasket may be formed via an extrusion process.

The constant cross-sectional profile may comprise: one or more frame-facing projections configured to be received within and/or abut a window frame member; and/or one or more glazing-facing projections configured to abut a glazing unit.

This provides a more effective seal between a glazing unit and a window frame.

At least one of the one or more frame-facing projections may be a frame attachment projection for securing the gasket to a recess in a window frame member, wherein the frame attachment projection has a variable width which varies in a direction extending away from the gasket, and wherein the variable width is maximal at a non-zero distance from a root of the frame attachment projection.

This provides a simple and effective means for securing a gasket to a window frame member.

The region of reduced cross-sectional area may comprise one glazing-facing projection and/or one frame-facing projection.

This helps to ensure that the corners of a window frame assembly are sealed, thus ensuring that there is an external seal between a glazing unit and a window frame around the entire periphery of the window frame assembly.

The gasket may be formed from a flexible polymeric material.

This allows the region of reduced cross-sectional area to bend at the corners of a window frame assembly, whilst also providing good thermal insulation properties.

A recess may be provided between the portions.

A recess helps to ensure that the region of reduced cross-sectional area is able to act as a hinge, whilst also providing sufficient connectivity between adjacent portions.

The gasket may further comprise a third portion connected to the second portion by a region of reduced cross-sectional area so as to act as a hinge, and a fourth portion connected to the third portion by a region of reduced cross-sectional area so as to act as a hinge, wherein at least section of the third portion is arranged to be interposed between the glazing unit and a third window frame member and at least a section of the fourth portion is arranged to be interposed between the glazing unit and a fourth window frame member which is at a non-zero angle to the first window frame member and the third window frame member.

According to the present invention, the composite gasket comprising two or more gaskets according to the present teachings connected together and formed as a unitary structure. The gaskets may be arranged such that a longitudinal edge of each of the first and second portions of each gasket are connected to a longitudinal edge of each of the first and second portions of an adjacent gasket respectively.

Advantageously, this allows two or more gaskets to be manufactured as a single strip, making manufacture quicker and cheaper. Further, the two or more gaskets comprised in the composite gasket will be the correct lengths for the frame members they are to be joined to.

The connection between adjacent gaskets is weaker than a tensile strength of the gaskets so as to allow separation of the gaskets from each other.

This allows the gaskets to be easily separated without having to use tools or machinery to cut the composite gasket.

One or more detachment lines may be located between adjacent gaskets, wherein each detachment line is configured to allow two adjacent gaskets to detach from each other when said adjacent gaskets are forced apart.

Advantageously, this helps to ensure that the gaskets have straight edges when separated.

The composite gasket may have a length and a width, wherein the length is greater than the width, and wherein the composite gasket is symmetrical about a plane running parallel to the length of the composite gasket.

This allows two identical gaskets of the correct length to be produced from a single composite gasket strip.

The present invention also provides a method of manufacturing composite gasket as claimed in claim 12.

### BRIEF DESCRIPTION OF THE DRAWINGS

Embodiments are now disclosed by way of example only with reference to the drawings, in which:
Figure 1a is a plan view of an embodiment of a gasket, not according to the present invention;
Figure 1b is a cross-sectional view of figure 1a on the section X-X of Figure 1a;
Figure 1c is a plan view of the gasket of figures 1a and 1b in an angled configuration;
Figure 2 is a cross-sectional view of an embodiment of a gasket, not according to the present invention;
Figure 3 is a cross-sectional view of a window frame assembly on the section 3-3 of Figure 6;
Figure 4 is a plan view of an embodiment of a composite gasket, according to the present invention;
Figure 5 is a cross-sectional view of an embodiment of a window frame assembly; and
Figure 6 is a perspective view of an embodiment of a window frame assembly incorporating a gasket of Figures 1a - 1c.

### DETAILED DESCRIPTION OF EMBODIMENT(S)

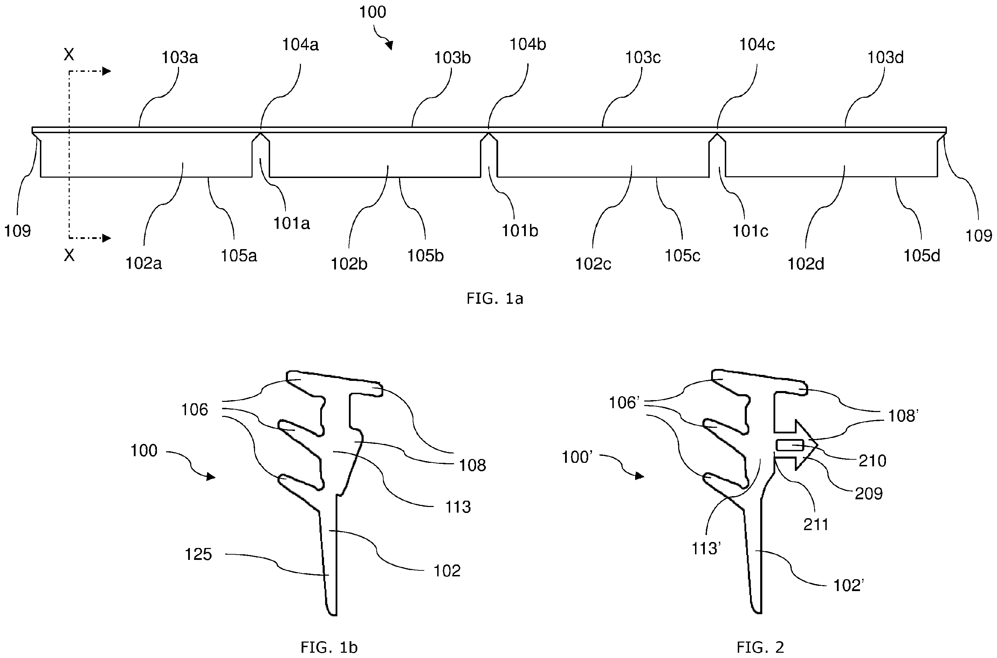

Figures 1a-1c show a gasket 100 for a window frame assembly. The gasket 100 comprises a plurality of portions 102a-d connected together via connector segments 104a-c.

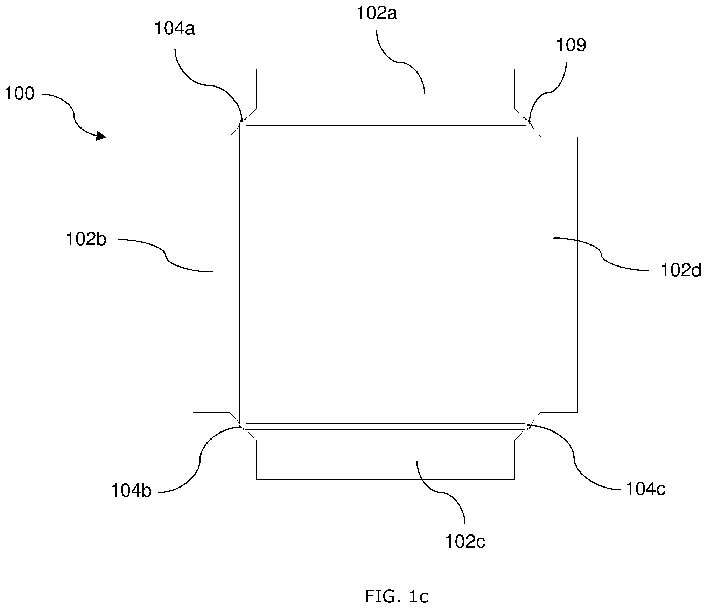

In the embodiment shown in figures 1a and 1c, the gasket 100 is formed from four portions 102a-d and three connector segments 104a-c. However, it will be appreciated that the gasket 100 could be formed from two, three or more than four portions 102 connected together via one, two or more than three connector segments 104.

In the illustrated embodiment, the gasket 100 is formed from a flexible polymeric material such as, for example, rubber or a thermoplastic elastomer such as ethylene propylene diene monomer (EPDM). However, the gasket 100 may be formed from any flexible, and preferably resilient, material.

In the embodiment shown in Figures 1a-1c, each portion 102a-d has a length aligned with the horizontal direction in figure 1a and defined as the distance between two adjacent connector segments 104a-c. This distance corresponds to the longitudinal inner edge 103a-d of each portion 102a-d, which can therefore be considered as the length of each portion. Each portion 102a-d also has a width aligned with the vertical direction in figure 1a and defined as the distance between the inner edge 103a-d of the portion 102a-d and the longitudinal outer edge 105a-d of the portion. The length of each portion 102a-d is greater than its width. Adjacent portions 102a-d are connected by connector segments 104a-c such that the inner edge 103a-d of each portion is alignable, i.e. it is capable of being aligned with the inner edges 103 of the remaining portions 102.

Each connector segment 104a-c is provided as a region of reduced cross-sectional area, i.e. each connector segment 104a-c has a smaller cross-sectional area in comparison to the portions 102a-d.

Providing the connector segments 104a-c as regions of reduced cross-sectional area allows each connector segment 104a-c to act as a hinge between adjacent portions 102a-d. This is illustrated in figure 1c in which each portion 102a-d of the gasket 100 shown in figure 1a is orientated at ninety degrees in relation to the portion(s) 102a-d adjacent to it. It can be clearly seen in figure 1c that each connector segment 104a-c is able to bend due to its reduced cross-sectional area, thus allowing the two portions 102a-d it connects to be orientated at different angles with respect to each other. It will be appreciated that the hinge-like connector segments 104a-c allow the gasket 100 to be located around the complete border of a glazing unit in order to provide a seal around said glazing unit that is continuous.

In the embodiment shown in figures 1a-1c, a recess 101a-c is located between adjacent portions 102a-d. In figure 1a, the recess 101a-c is generally U-shaped. However, it will be appreciated that the recess 101 could alternatively be V-shaped or rectangular for example.

Each recess 101a-c located between two adjacent portions 102a-d results in the connector segments 104 being of a reduced cross-sectional area in comparison to the portions 102.

The gasket 100 further includes "half recesses" 109 at each free end so that when fitted to a frame assembly in the configuration shown in Figure 1c and the free ends abut each other, a corresponding "full" recess is provided, but without a hinged connection.

In the embodiment shown in figures 1a-1c, each portion 102a-d of the gasket 100 has a constant cross-sectional profile along an extrusion axis that is parallel to the length of each portion 102a-d.

Figure 1b shows the constant cross-sectional profile of the portion 102a of the gasket 100 as viewed along the section X-X shown in figure 1a. The cross-sectional profile of the gasket 100 shown in figure 1b includes a core 113 and one or more glazing-facing projections 106 projecting away from the core 113 that are configured to abut a glazing unit for sealing purposes.

In the illustrated embodiment, the cross-sectional profile of the gasket 100 comprises three glazing-facing projections 106. However, it will be appreciated that the cross-sectional profile of the gasket 100 could comprise zero, one, two, or more than three glazing-facing projections 106.

The cross-sectional profile of the gasket 100 shown in figure 1b also includes one or more frame-facing projections 108 projecting away from the core 113 that are configured to be received within and/or abut a window frame member.

In the illustrated embodiment, the cross-sectional profile of the gasket 100 comprises two frame-facing projections 108. However, it will be appreciated that the cross-sectional profile of the gasket 100 could comprise zero, one, or more than two frame-facing projections 108. Including one or more glazing-facing projections 106 and one or more frame-facing projections 108 in the cross-sectional profile of a portion 102 of the gasket 100 allows the gasket 100 to provide a more effective seal between a glazing unit and a window frame member.

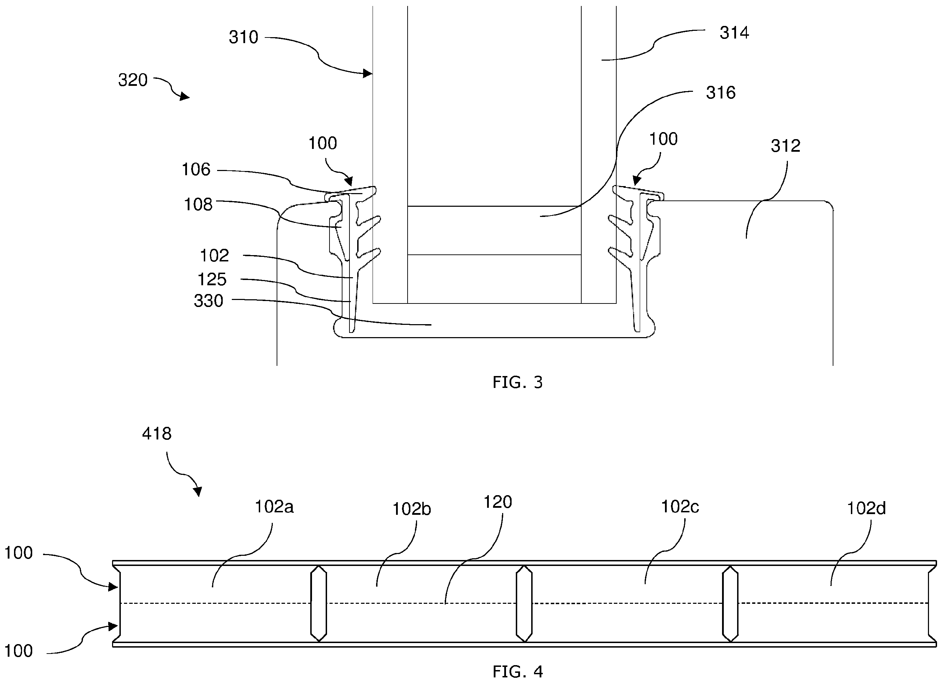

Further, in this embodiment, the gasket 100 profile comprises a 'tail' 125 that extends downwardly between the glazing unit 310 and window frame member 312a (see figure 3) and may further enhance the thermal insulation properties of the gasket and the window frame assembly as a whole when installed therein by inhibiting heat transfer across the window frame assembly.

In this embodiment the recesses 101a-c extend such that the remaining cross-sectional area of the connector segments 104a-c is that of the uppermost glazing facing projection 106 and uppermost frame facing projection 108 only. This maintains the sealing properties of the gasket 100 at the connector segments, but enables them to effectively function as a hinge.

In the embodiment illustrated in figures 1a-1c, each connector segment 104 comprises one glazing-facing projection 106 and one frame-facing projection 108, each aligned with the respective uppermost glazing facing projection 106 and uppermost frame-facing projection 108 in the constant cross-sectional profile of each portion 102 illustrated in figure 1b. However, in some embodiments, each connector segment 104 may comprise only a glazing-facing projection 106, only a frame-facing projection 108, or no projections.

In the embodiment illustrated in figures 1a-1c, each portion 102 is shown to be identical. However, it will be appreciated that in some embodiments, each portion may have a different length, a different width and/or a different cross-sectional profile/area etc.

Figure 2 shows a constant cross-sectional profile of a portion 102' of a gasket 100' in an alternative embodiment that may incorporate one or more of the features described above in relation to the gasket 100 shown in figures 1a-c.

The cross-sectional profile shown in figure 2 includes a core 113' and both glazing-facing projections 106' and frame-facing projections 108'. At least one of the frame-facing projections 108' is a frame attachment projection 209 that is for securing the gasket 100' to a suitably shaped recess in a window frame member.

In the embodiment shown in figure 2, the frame attachment projection 209 is generally arrow-shaped and has a width that varies in a direction extending away from the core 113' of the gasket 100', where the width of the projection is vertically aligned in figure 2. As shown, the variable width of the frame attachment projection 209 is maximal at a non-zero distance away from a root 211 of the frame attachment projection 209; where the root 211 is the region where the frame attachment projection 209 joins the core 113'.

In alternative embodiments (not shown), the frame attachment projection 209 may have a different cross-sectional shape, such as, for example, a T-shape or any other suitable shape.

In the illustrated embodiment, the frame attachment projection 209 includes a cavity 210. The cavity 210 is generally rectangular and allows the frame attachment projection 209 to flex more easily within the plane shown in figure 2 compared to if no cavity 210 was present.

In alternative embodiments (not shown), the frame attachment projection 209 may comprise an alternatively shaped cavity 210, more than one cavity 210 or no cavity 210.

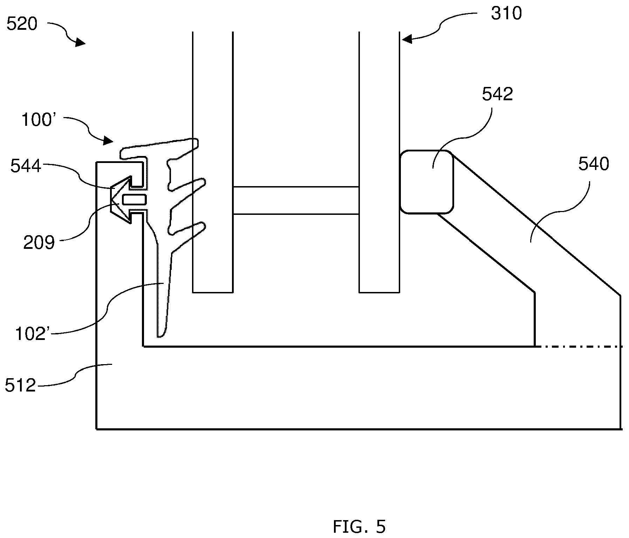

The frame attachment projection 209 shown in figure 2 is configured to be slid along the extrusion axis of the gasket 100' into a correspondingly shaped recess in a frame member or a bead (see the discussion below regarding figure 5), or alternatively may be flexed and fitted into place transversely. With the frame attachment projection 209 so received in the correspondingly shaped recess in the frame member, the gasket 100' is restricted from moving relative to the frame member transversely, i.e. in directions perpendicular to the extrusion axis of the gasket 100'.

Figure 3 shows a cross-sectional view of a beadless window frame assembly 320 comprising two functionally identical mirror image gaskets 100, a glazing unit 310, and a window frame member 312. The profile of a portion 102 of each gasket 100 is shown in figure 3 in a relaxed state. The gaskets 100 illustrated in figure 3 correspond to the gasket 100 illustrated in figures 1a-1c.

The glazing unit 310 illustrated in figure 3 comprises two parallel panes of glass 314 separated by a spacer 316. However, it will be appreciated that the glazing unit 310 could alternatively comprise one glass pane 314 without a spacer 316, or more than two glass panes 314 with two or more spacers 316.

The window frame member 312 comprises a channel 330 into which the glazing unit 310 has been inserted, such that the window frame member 312 runs along an edge of the glazing unit 310.

Each gasket 100 abuts an opposite face of the glazing unit 310 and the gaskets 100 are orientated such that the gaskets 100 are symmetrical about a plane parallel to both panes of glass 314 and running through the centre of the glazing unit 310. At least a section of each portion 102 is interposed between the glazing unit 310 and the window frame member 312. In figure 3, the majority of each portion 102 is interposed between the glazing unit 310 and the window frame member 312, with only the uppermost glazing-facing projection 106 and uppermost frame-facing projection 108 (i.e. uppermost with respect to figure 3) not interposed between the glazing unit 310 and the window frame member 312.

The uppermost frame-facing projection 108 of each gasket 100 overlies an exposed surface of the window frame member 312 and is aligned with the uppermost glazing-facing projection 106 of each gasket 100 so as to form a seal between the exposed surface of the window frame member 312 and the glazing unit 310.

Although depicted in a relaxed state, in reality the fitting of the gaskets 100 into the gaps between the glazing unit 310 and the window frame member 312 will cause the gaskets 100 to deflect and conform to the available space.

Figure 5 shows a cross-sectional profile view of a beaded window frame assembly 520 comprising the gasket 100' shown in figure 2, the glazing unit 310, a window frame member 512, a bead 540 and a bead gasket 542.

The profile of a portion 102' of the gasket 100' is shown in a relaxed state. The window frame member 512 runs along an edge of the glazing unit 310.

The frame attachment projection 209 of the gasket 100' is secured within a correspondingly shaped recess 544 in the window frame member 512. The frame attachment projection 209 is configured to be flexed and fitted into place transversely into the recess 544. With the frame attachment projection 209 so received in the correspondingly shaped recess 544, the gasket 100' is restricted from moving relative to the frame member 512 transversely, i.e. in directions perpendicular to the extrusion axis of the gasket 100'.

The bead 540 is releasably connected to the window frame member 512 via any method known in the art; the connection is shown schematically as a dot-dash line in figure 5.

The bead gasket 542 is shown schematically in figure 5, and may correspond to the gasket 100 shown in figure 1b or the gasket 100' shown in figure 2 for example.

Figure 4 shows a composite gasket 418. The composite gasket 418 comprises two identical gaskets 100 according to embodiments of figures 1a-1c described above connected together and formed as a unitary structure. In other embodiments the composite gasket may comprise two gaskets of the embodiment of Figure 2 or one of the embodiments of Figure 1a-c and 1 of Figure 2, for example.

In figure 4, each gasket 100 comprises four portions 102a-d. However, it will be appreciated that in other embodiments, the composite gasket 418 could comprise three or more gaskets 100, and/or each gasket 100 could comprise two, three or more than four portions 102.

In the illustrated embodiment, the gaskets 100 are arranged such that a longitudinal edge of each portion 102a-d of a first of the gaskets 100 is connected to a longitudinal edge of a portion 102a-d of a second of the gaskets 100. The portions 102a-d are connected along their outer edges; i.e. outer edges 105a-d in figure 1a for example. However, it will be appreciated that in other embodiments, the portions 102a-d could be connected along their inner edges; see inner edges 103a-d in figure 1a for example. Further, in embodiments where the composite gasket 418 comprises three or more gaskets 100, portions of a first gasket may be connected to portions of a second gasket along their inner edges, and the portions of the second gasket may be connected to portions of a third gasket along their outer edges etc. Alternatively, multiple gaskets may be commonly connected along their inner or outer edges.

In this embodiment, the connection between adjacent gaskets 100 is weaker than the tensile strength of each of the gaskets 100. This allows the gaskets 100 to be separated from each other without requiring the composite gasket 418 to be cut, since the gaskets 100 can be separated by forcing/tearing the gaskets 100 apart. In other embodiments this need not be the case however.

In the embodiment shown in figure 4, the gaskets 100 are connected along a detachment line 120 that is located between the adjacent gaskets 100. The detachment line 120 is configured to allow the two adjacent gaskets 100 located either side of the detachment line 120 to detach from each other when said adjacent gaskets 100 are forced apart. The tensile strength of the detachment line 120 is weaker than the tensile strength of each of the adjacent gaskets 100. To achieve this, the composite gasket 418 may have a reduced thickness in comparison to the adjacent gaskets 100 along the detachment line 120.

Alternatively or additionally, the composite gasket 418 may be discontinuously cut or scored along the detachment line 120.

Alternatively or additionally, the composite gasket 418 may be formed from a weaker material along the detachment line 120 than the remainder of the composite gasket.

Although the embodiment in figure 4 shows a single detachment line 120, it will be appreciated that in embodiments where a composite gasket 418 comprises three or more gaskets, the composite gasket 418 may comprise two or more detachment lines; i.e. where a detachment line 120 is located between each connected pair of adjacent gaskets 100.

The composite gasket 418 shown in figure 4 has a length equal to the length of the gaskets 100, which are identical. The composite gasket 418 has a width equal to the sum of the widths of the gaskets 100. The length of the composite gasket 418 is greater than its width. In the embodiment shown in figure 4, the composite gasket 418 is symmetrical about a plane running parallel to its length. In the illustrated embodiment, the composite gasket 418 is symmetrical about the detachment line 120.

In an alternative embodiment to that illustrated in figure 4, the gaskets 100 are connected in end-to-end fashion; i.e. two or more gaskets are connected such that the width of the composite gasket 418 is equal to the width of the gaskets 100.

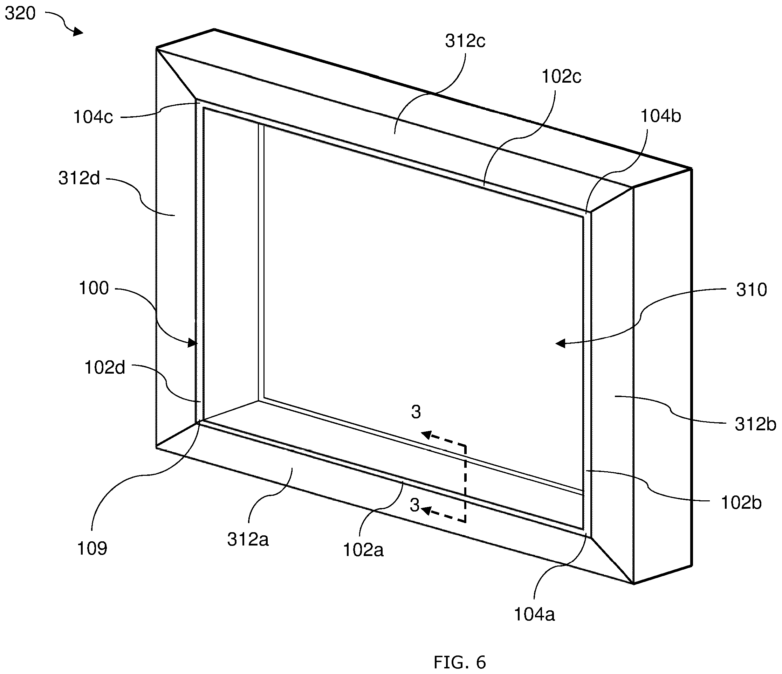

Figure 6 shows a perspective view of the window frame assembly 320 (i.e. a beadless window frame assembly of Figure 3).

The window frame assembly 320 comprises the gasket 100 of Figures 1a-1c, a four-sided glazing unit 310, a first window frame member 312a, a second window frame member 312b, a third window frame member 312c and a fourth window frame member 312d.

Each of the window frame members 312a-d are arranged at right angles with respect to their adjacent frame members to form a rectangular window frame assembly 320.

At least a section of the first portion 102a is interposed between the glazing unit 310 and the first window frame member 312a. At least a section of the second portion 102b is interposed between the glazing unit 310 and the second window frame member 312b. At least a section of the third portion 102c is interposed between the glazing unit 310 and the third window frame member 312c. At least a section of the fourth portion 102d is interposed between the glazing unit 310 and the fourth window frame member 312d. Consequently the free ends of the gasket 100 meet in one of the corners.

The window frame members 312a-d and glazing unit 310 are first assembled together without the gaskets 100 in place.

The gasket 100 is fitted as follows. The first portion 102a of the gasket 100 is aligned with and push fitted between the first window frame member 312a and the glazing unit 310, the second portion 102b is push fitted between the second window frame member 312b and the glazing unit 310, the third portion 102c is push fitted between the third window frame member 312c and the glazing unit 310, and the fourth portion 102d is interposed between the fourth window frame member 312d and the glazing unit 310. As a result the gasket fully encircles the margin of the glazing unit 310.

The gasket 100 on the opposing face of the glazing unit is fitted the same way.

Prior to fitting, the gaskets 100 are detached from the composite gasket 418.

To fit the gaskets to the beaded window as shown in Figure 5, four frame members 512 are first assembled together to form a rectangular frame. The gasket 100' is then fitted into the recess 544 of each frame member 512. The glazing unit 310 is offered up to the frame members 512 and beads 540 are fitted into place on each frame member 512, leaving a gap between the glazing unit and the bead. A gasket 100 of the type illustrated in Figures 1a-1c is then fitted into the gap in a similar way as described above in relation to Figure 6.

With reference to figure 1a for illustrative purposes only, in a first step of the method, the gasket 100 is extruded via an extrusion process. As such, the gasket 100 has a constant cross-sectional profile, for example such as those illustrated in figure 1b or figure 2, along an extrusion axis of the gasket 100.

In a second step, recesses 101a-c are cut or punched out of the gasket 100 to define the connector segments 104a-c. The location of the recesses 101a-c is selected according to the dimensions of the window frame members to which the gasket is to be fitted. As the punching is carried out as a continuous process, the half recesses are punched as a full recess, and then the gasket is cut to length so that half recesses are formed in two consecutive gaskets.

With reference to figure 4, in some embodiments, the composite gasket 418 is manufactured via the method described above. The die used for the extrusion is shaped such that the thickness of material at the detachment line is reduced so the two gaskets may be readily torn apart at this location only.

In such embodiments, two or more gaskets 100 are extruded via an extrusion process as a unitary structure.

Subsequently, the recesses are cut or punched out of the composite gasket 418 between one or more opposing pairs of connector segments located between opposing connected portions 102 of the gaskets 100.

In other embodiments, the composite gasket may have the detachment line formed in a post-processing operation, such as scoring or intermittent cuts.

Advantageously, where the two gaskets 100 are intended to be utilised on opposing faces of a glazing unit on the same frame assembly a single punching operation with a single appropriately shaped punch forms the recesses 101a-c and associated connector segments 102a-c simultaneously and in the correct location. For beadless and beaded windows, the gaskets may be supplied as a kit with the other window components, including the correspondingly dimensioned frame members, for assembly on-site, or may be assembled in a factory off-site from their finished location.

## Claims

1. A composite gasket (418) comprising two or more gaskets (100) for a window frame assembly, the gaskets (100) connected together and formed as a unitary structure, each gasket (100) comprising a first portion (102a) and a second portion (102b) connected together by a region of reduced cross-sectional area (104a) so as to act as a hinge, wherein at least a section of the first portion (102a) is arranged to be interposed between a glazing unit (310) and a first window frame member (312a) and at least a section of the second portion (102b) is arranged to be interposed between the glazing unit (310) and a second window frame member (312b) which is at a non-zero angle to the first window frame member (312a), wherein the connection between adjacent gaskets (100) is weaker than a tensile strength of the gaskets (100) so as to allow separation of the gaskets (100) from each other.

2. The composite gasket (418) of claim 1, wherein each portion (102a, 102b) has a constant cross-sectional profile along an extrusion axis of the respective gasket (100)

3. The composite gasket (418) of claim 2, wherein the constant cross-sectional profile comprises: one or more frame-facing projections (108, 108') configured to be received within and/or abut a window frame member (312, 512); and/or one or more glazing-facing projections (106) configured to abut a glazing unit (310).

4. The composite gasket (418) of claim 3, wherein at least one of the one or more frame-facing projections (108') is a frame attachment projection (209) for securing the gasket (100) to a recess (544) in a window frame member (512), wherein the frame attachment projection (209) has a variable width which varies in a direction extending away from the gasket (100), and wherein the variable width is maximal at a non-zero distance from a root of the frame attachment projection (209).

5. The composite gasket (418) of any preceding claim, wherein the region of reduced cross-sectional area (104a) comprises one glazing-facing projection (106, 106') and/or one frame-facing projection (108, 108').

6. The composite gasket (418) of any preceding claim, wherein a recess (101a) is provided between the portions (102a, 102b).

7. The composite gasket (418) of any preceding claim, wherein each gasket (100) further comprises a third portion (102c) connected to the second portion (102b) by a region of reduced cross-sectional area (104b) so as to act as a hinge, and a fourth portion (102d) connected to the third portion (102c) by a region of reduced cross-sectional area (104c) so as to act as a hinge, wherein at least a section of the third portion (102c) is arranged to be interposed between the glazing unit (310) and a third window frame member (312c) and at least a section of the fourth portion (102d) is arranged to be interposed between the glazing unit (310) and a fourth window frame member (312d) which is at a non-zero angle to the first window frame member (312a) and the third window frame member (312c).

8. The composite gasket (418) of any preceding claim, wherein the gaskets (100) are arranged such that a longitudinal edge of each of the first and second portion (102a, 102b) of each gasket (100) are connected to a longitudinal edge of each of the first and second portion (120a, 102b) of an adjacent gasket respectively.

9. The composite gasket (418) of any preceding claim, wherein one or more detachment lines (120) are located between adjacent gaskets (100), and wherein each detachment line (120) is configured to allow two adjacent gaskets (100) to detach from each other when said adjacent gaskets (100) are forced apart.

10. The composite gasket (418) of any preceding claim, wherein the composite gasket (418) has a length and a width, wherein the length is greater than the width, and wherein the composite gasket (418) is symmetrical about a plane running parallel to the length of the composite gasket (418).

11. Use of the composite gasket (418) of claim 7 in a window frame assembly (320) comprising:
a glazing unit (310);
a first window frame member (312a);
a second window frame member (312b);
a third window frame member (312c); and
a fourth window frame member (312d),
wherein the first and second gaskets (100) are separate, and detached from the composite gasket (418),
wherein the first and second gaskets (100) are on opposite faces of the glazing unit (310),
wherein at least a section of the first portion (102a) of each gasket (100) is interposed between the glazing unit (310) and the first window frame member (312a), at least a section of the second portion (102b) of each gasket (100) is interposed between the glazing unit (310) and the second window frame member (312b), at least a section of the third portion (102c) of each gasket (100) is interposed between the glazing unit (310) and the third window frame member (312c), and at least a section of the fourth portion (102d) of each gasket (100) is interposed between the glazing unit (310) and the fourth window frame member (312d), and wherein the first window frame member (312a) and the third window frame member (312c) are each at a non-zero angle to the second window frame member (312b) and the fourth window frame member (312d).

12. A method of manufacturing a composite gasket (418) comprising two or more gaskets (100) for a window frame assembly, the gaskets (100) connected together and formed as a unitary structure, the method comprising the steps of:
extruding the composite gasket (418) via an extrusion process; and
cutting or punching out one or more recesses (101a) in the composite gasket (418), each recess (101a) located between an opposing pair of connector segments (104a), each connector segment (104a) located between a first portion (102a) and a second portion (102b) of one of the gaskets (100), and having a reduced cross-sectional area relative to the first and the second portions (102a, 102b) due to the recess (101a) so as to allow the connector segment (104a) to act as a hinge,
wherein the connection between adjacent gaskets (100) is weaker than a tensile strength of the gaskets (100) so as to allow separation of the gaskets (100) from each other.

13. The method of claim 12, further comprising:
forming one or more detachment lines (120) between adjacent gaskets (100),
wherein each detachment line (120) is configured to allow two adjacent gaskets (100) to detach from each other when said adjacent gaskets (100) are forced apart.

14. The method of claims 12 or 13, wherein the gaskets (100) are arranged such that a longitudinal edge of each of the first and second portion (102a, 102b) of each gasket (100) are connected to a longitudinal edge of each of the first and second portion (120a, 102b) of an adjacent gasket respectively.

15. The method of any one of claims 12 to 14, wherein each portion (102a, 102b) has a constant cross-sectional profile along an extrusion axis of the respective gasket (100).

## Patentansprüche

1. Komposit-Dichtung (418), umfassend zwei oder mehr Dichtungen (100) für eine Fensterrahmenanordnung, wobei die Dichtungen (100) miteinander verbunden und als einheitliche Struktur ausgebildet sind, wobei jede Dichtung (100) einen ersten Abschnitt (102a) und einen zweiten Abschnitt (102b) umfasst, die durch einen Bereich mit reduzierter Querschnittsfläche (104a) miteinander verbunden sind, so dass sie als Scharnier fungieren, wobei mindestens ein Abschnitt des ersten Abschnitts (102a) so angeordnet ist, dass er zwischen einer Verglasungseinheit (310) und einem ersten Fensterrahmenelement (312a) angeordnet ist, und mindestens ein Abschnitt des zweiten Abschnitts (102b) so angeordnet ist, dass er zwischen der Verglasungseinheit (310) und einem zweiten Fensterrahmenelement (312b) angeordnet ist, das in einem Winkel ungleich Null zum ersten Fensterrahmenelement (312a) steht, wobei die Verbindung zwischen benachbarten Dichtungen (100) schwächer ist als eine Zugfestigkeit der Dichtungen (100), um eine Trennung der Dichtungen voneinander zu ermöglichen (100).

2. Komposit-Dichtung (418) nach Anspruch 1, wobei jeder Abschnitt (102a, 102b) ein konstantes Querschnittsprofil entlang einer Extrusionsachse der jeweiligen Dichtung (100) aufweist.

3. Komposit-Dichtung (418) nach Anspruch 2, wobei das konstante Querschnittsprofil umfasst: einen oder mehrere zum Rahmen weisende Vorsprünge (108, 108'), die dazu beschaffen sind, in einem Fensterrahmenelement (312, 512) aufgenommen zu werden und/oder an diesem anzuliegen, und/oder einen oder mehrere zum Glas weisende Vorsprünge (106), die dazu beschaffen sind, an einer Verglasungseinheit (310) anzuliegen.

4. Komposit-Dichtung (418) nach Anspruch 3, wobei mindestens einer der zum Rahmen weisenden Vorsprünge (108') ein Rahmenbefestigungsvorsprung (209) zur Befestigung der Dichtung (100) an einer Aussparung (544) in einem Fensterrahmenelement (512) ist, wobei der Rahmenbefestigungsvorsprung (209) eine variable Breite aufweist, die sich in einer Richtung, die sich von der Dichtung (100) weg erstreckt, ändert und wobei die variable Breite in einem von Null verschiedenen Abstand von einer Wurzel des Rahmenbefestigungsvorsprungs (209) maximal ist.

5. Komposit-Dichtung (418) nach einem der vorhergehenden Ansprüche, wobei der Bereich mit reduzierter Querschnittsfläche (104a) einen zum Glas weisenden Vorsprung (106, 106') und/oder einen zum Rahmen weisenden Vorsprung (108, 108') umfasst.

6. Komposit-Dichtung (418) nach einem der vorhergehenden Ansprüche, wobei zwischen den Abschnitten (102a, 102b) eine Aussparung (101a) vorgesehen ist.

7. Komposit-Dichtung (418) nach einem der vorhergehenden Ansprüche, wobei jede Dichtung (100) ferner einen dritten Abschnitt (102c), der mit dem zweiten Abschnitt (102b) durch einen Bereich mit reduzierter Querschnittsfläche (104b) verbunden ist, so dass er als Scharnier fungiert, und einen vierten Abschnitt (102d), der mit dem dritten Abschnitt (102c) durch einen Bereich mit reduzierter Querschnittsfläche (104c) verbunden ist, so dass er als Scharnier fungiert, umfasst, wobei mindestens ein Abschnitt des dritten Abschnitts (102c) zwischen der Verglasungseinheit (310) und einem dritten Fensterrahmenelement (312c) angeordnet ist und mindestens ein Abschnitt des vierten Abschnitts (102d) zwischen der Verglasungseinheit (310) und einem vierten Fensterrahmenelement (312d) angeordnet ist, das in einem von Null verschiedenen Winkel zum ersten Fensterrahmenelement (312a) und zum dritten Fensterrahmenelement (312c) steht.

8. Komposit-Dichtung (418) nach einem der vorhergehenden Ansprüche, wobei die Dichtungen (100) derart angeordnet sind, dass eine Längskante des ersten und zweiten Abschnitts (102a, 102b) jeder Dichtung (100) jeweils mit einer Längskante des ersten und zweiten Abschnitts (120a, 102b) einer benachbarten Dichtung verbunden ist.

9. Komposit-Dichtung (418) nach einem der vorhergehenden Ansprüche, wobei sich zwischen benachbarten Dichtungen (100) eine oder mehrere Trennlinien (120) befinden und wobei jede Trennlinie (120) so beschaffen ist, dass sich zwei benachbarte Dichtungen (100) voneinander lösen können, wenn diese auseinandergedrückt werden.

10. Komposit-Dichtung (418) nach einem der vorhergehenden Ansprüche, wobei die Komposit-Dichtung (418) eine Länge und eine Breite aufweist, wobei die Länge größer als die Breite ist, und wobei die Komposit-Dichtung (418) symmetrisch zu einer Ebene ist, die parallel zur Länge der Komposit-Dichtung (418) verläuft.

11. Verwendung der Komposit-Dichtung (418) nach Anspruch 7 in einer Fensterrahmenanordnung (320), umfassend:
eine Verglasungseinheit (310),
ein erstes Fensterrahmenelement (312a),
ein zweites Fensterrahmenelement (312b),
ein drittes Fensterrahmenelement (312c) und
ein viertes Fensterrahmenelement (312d),
wobei die erste und die zweite Dichtung (100) separiert und von der Komposit-Dichtung (418) abgelöst sind,
wobei sich die erste und die zweite Dichtung (100) auf gegenüberliegenden Seiten der Verglasungseinheit (310) befinden,
wobei mindestens ein Abschnitt des ersten Abschnitts (102a) jeder Dichtung (100) zwischen der Verglasungseinheit (310) und dem ersten Fensterrahmenelement (312a) eingeschoben ist, mindestens ein Abschnitt des zweiten Abschnitts (102b) jeder Dichtung (100) zwischen der Verglasungseinheit (310) und dem zweiten Fensterrahmenelement (312b) eingeschoben ist, mindestens ein Abschnitt des dritten Abschnitts (102c) jeder Dichtung (100) zwischen der Verglasungseinheit (310) und dem dritten Fensterrahmenelement (312c) eingeschoben ist und mindestens ein Abschnitt des vierten Abschnitts (102d) jeder Dichtung (100) zwischen der Verglasungseinheit (310) und dem vierten Fensterrahmenelement (312d) eingeschoben ist, wobei das erste Fensterrahmenelement (312a) und das dritte Fensterrahmenelement (312c) jeweils einen Winkel ungleich Null zum zweiten Fensterrahmenelement (312b) und zum vierten Fensterrahmenelement (312d) bilden.

12. Verfahren zur Herstellung einer Komposit-Dichtung (418), umfassend zwei oder mehr Dichtungen (100) für eine Fensterrahmenanordnung, wobei die Dichtungen (100) miteinander verbunden und als einheitliche Struktur ausgebildet sind, das Verfahren umfassend die Schritte:
Extrudieren der Komposit-Dichtung (418) mittels eines Extrusionsverfahrens und
Ausschneiden oder Ausstanzen einer oder mehrerer Aussparungen (101a) in der Komposit-Dichtung (418), wobei sich jede Aussparung (101a) zwischen einem gegenüberliegenden Paar von Verbindungssegmenten (104a) befindet, wobei sich jedes Verbindungssegment (104a) zwischen einem ersten Abschnitt (102a) und einem zweiten Abschnitt (102b) einer der Dichtungen (100) befindet und aufgrund der Aussparung (101a) eine im Vergleich zum ersten und zweiten Abschnitt (102a, 102b) reduzierte Querschnittsfläche aufweist, so dass das Verbindungssegment (104a) als Scharnier fungieren kann,
wobei die Verbindung zwischen benachbarten Dichtungen (100) schwächer ist als die Zugfestigkeit der Dichtungen (100), so dass eine Trennung der Dichtungen (100) voneinander ermöglicht wird.

13. Verfahren nach Anspruch 12, ferner umfassend:
Bilden einer oder mehrerer Trennlinien (120) zwischen benachbarten Dichtungen (100),
wobei jede Trennlinie (120) so konfiguriert ist, dass sich zwei benachbarte Dichtungen (100) voneinander lösen, wenn diese auseinandergedrückt werden.

14. Verfahren nach Anspruch 12 oder 13, wobei die Dichtungen (100) so angeordnet sind, dass jeweils eine Längskante des ersten und zweiten Abschnitts (102a, 102b) jeder Dichtung (100) mit jeweils einer Längskante des ersten und zweiten Abschnitts (120a, 102b) einer benachbarten Dichtung verbunden ist.

15. Verfahren nach einem der Ansprüche 12 bis 14, wobei jeder Abschnitt (102a, 102b) entlang einer Extrusionsachse der jeweiligen Dichtung (100) ein konstantes Querschnittsprofil aufweist.

## Revendications

1. Joint composite (418) comprenant deux ou plusieurs joints (100) pour un ensemble de cadre de fenêtre, les joints (100) étant reliés entre eux et formés en une structure unitaire, chaque joint (100) comprenant une première partie (102a) et une seconde partie (102b) reliées entre elles par une zone de section transversale réduite (104a) de manière à agir comme une charnière, dans lequel au moins une section de la première partie (102a) est agencée pour être interposée entre une unité de vitrage (310) et un premier élément de cadre de fenêtre (312a) et au moins une section de la seconde partie (102b) est agencée pour être interposée entre l'unité de vitrage (310) et un second élément de cadre de fenêtre (312b) qui est à un angle non nul par rapport au premier élément de cadre de fenêtre (312a), dans lequel la connexion entre les joints adjacents (100) est plus faible qu'une résistance à la traction des joints (100) de manière à permettre la séparation des joints (100) les uns des autres.

2. Joint composite (418) selon la revendication 1, dans lequel chaque partie (102a, 102b) a un profil de section transversale constant le long d'un axe d'extrusion du joint respectif (100)

3. Joint composite (418) selon la revendication 2, dans lequel le profil de section transversale constant comprend : une ou plusieurs saillies faisant face au cadre (108, 108') configurées pour être reçues à l'intérieur et/ou en butée contre un élément de cadre de fenêtre (312, 512) ; et/ou une ou plusieurs saillies faisant face au vitrage (106) configurées pour venir en butée contre une unité de vitrage (310).

4. Joint composite (418) selon la revendication 3, dans lequel au moins une des une ou plusieurs saillies (108') faisant face au cadre est une saillie de fixation de cadre (209) pour fixer le joint (100) à un évidement (544) dans un élément de cadre de fenêtre (512), dans lequel la saillie de fixation de cadre (209) a une largeur variable qui varie dans une direction s'étendant à l'écart du joint (100), et dans lequel la largeur variable est maximale à une distance non nulle d'une racine de la saillie de fixation de cadre (209).

5. Joint composite (418) selon l'une quelconque des revendications précédentes, dans lequel la zone de section transversale réduite (104a) comprend une saillie faisant face au vitrage (106, 106') et/ou une saillie faisant face au cadre (108, 108').

6. Joint composite (418) selon l'une quelconque des revendications précédentes, dans lequel un évidement (101a) est prévu entre les parties (102a, 102b).

7. Joint composite (418) selon l'une quelconque des revendications précédentes, dans lequel chaque joint (100) comprend en outre une troisième partie (102c) reliée à la deuxième partie (102b) par une zone de section transversale réduite (104b) de manière à agir comme une charnière, et une quatrième partie (102d) reliée à la troisième partie (102c) par une zone de section transversale réduite (104c) de manière à agir comme une charnière, dans lequel au moins une section de la troisième partie (102c) est agencée pour être interposée entre l'unité de vitrage (310) et un troisième élément de cadre de fenêtre (312c) et au moins une section de la quatrième partie (102d) est agencée pour être interposée entre l'unité de vitrage (310) et un quatrième élément de cadre de fenêtre (312d) qui est à un angle non nul par rapport au premier élément de cadre de fenêtre (312a) et au troisième élément de cadre de fenêtre (312c).

8. Joint composite (418) selon l'une quelconque des revendications précédentes, dans lequel les joints (100) sont disposés de telle sorte qu'un bord longitudinal de chacune des première et deuxième parties (102a, 102b) de chaque joint (100) est relié à un bord longitudinal de chacune des première et deuxième parties (120a, 102b) d'un joint adjacent respectivement.

9. Joint composite (418) selon l'une quelconque des revendications précédentes, dans lequel une ou plusieurs lignes de détachement (120) sont situées entre des joints adjacents (100), et dans lequel chaque ligne de détachement (120) est configurée pour permettre à deux joints adjacents (100) de se détacher l'un de l'autre lorsque lesdits joints adjacents (100) sont écartés l'un de l'autre.

10. Joint composite (418) selon l'une quelconque des revendications précédentes, dans lequel le joint composite (418) a une longueur et une largeur, dans lequel la longueur est supérieure à la largeur, et dans lequel le joint composite (418) est symétrique par rapport à un plan parallèle à la longueur du joint composite (418).

11. Utilisation du joint composite (418) de la revendication 7 dans un cadre de fenêtre (320) comprenant :
un vitrage (310) ;
un premier élément de cadre de fenêtre (312a) ;
un second élément de cadre de fenêtre (312b) ;
un troisième élément de cadre de fenêtre (312c) ; et
un quatrième élément de cadre de fenêtre (312d),
les premiers et seconds joints (100) étant séparés et indépendants du joint composite (418),
les premiers et seconds joints (100) étant situés sur les faces opposées du vitrage (310),
au moins une partie de la première section (102a) de chaque joint (100) étant située entre le vitrage (310) et le premier élément de cadre de fenêtre (312a), au moins une partie de la seconde section (102b) de chaque joint (100) étant située entre le vitrage (310) et le second élément de cadre de fenêtre (312b), au moins une partie de la troisième section (102c) de chaque joint (100) étant située entre le vitrage (310) et le troisième élément de cadre de fenêtre (312c), et au moins une partie de la quatrième section (102d) de chaque joint (100) étant située entre le vitrage (310) et le quatrième élément de cadre de fenêtre (312d), le premier élément de cadre de fenêtre (312a) et le troisième élément de cadre de fenêtre (312c) formant un angle non nul avec le second élément de cadre de fenêtre (312b) et le quatrième élément de cadre de fenêtre (312d).

12. Procédé de fabrication d'un joint composite (418) comprenant deux ou plusieurs joints (100) pour un ensemble de cadre de fenêtre, les joints (100) étant reliés entre eux et formés en une structure unitaire, le procédé comprenant les étapes suivantes :
l'extrusion du joint composite (418) par un procédé d'extrusion ; et
le découpe ou le poinçonnage d'un ou plusieurs évidements (101a) dans le joint composite (418), chaque évidement (101a) étant situé entre une paire opposée de segments de connecteur (104a), chaque segment de connecteur (104a) étant situé entre une première partie (102a) et une deuxième partie (102b) de l'un des joints (100), et ayant une surface de section transversale réduite par rapport à la première et à la deuxième partie (102a, 102b) en raison de l'évidement (101a) de manière à permettre au segment de connecteur (104a) d'agir comme une charnière, dans lequel la connexion entre les joints adjacents (100) est plus faible qu'une résistance à la traction des joints (100) de manière à permettre la séparation des joints (100) les uns des autres.

13. Le procédé selon la revendication 12, comprenant en outre :
la formation d'une ou plusieurs lignes de détachement (120) entre des joints adjacents (100),
dans lequel chaque ligne de détachement (120) est configurée pour permettre à deux joints adjacents (100) de se détacher l'un de l'autre lorsque lesdits joints adjacents (100) sont séparés de force.

14. Le procédé selon les revendications 12 ou 13, dans lequel les joints (100) sont disposés de telle sorte que le bord longitudinal de chacune des première et deuxième parties (102a, 102b) de chaque joint (100) est relié à un bord longitudinal de chacune des première et deuxième parties (120a, 102b) d'un joint adjacent, respectivement.

15. Le procédé selon l'une quelconque des revendications 12 à 14, dans lequel chaque partie (102a, 102b) a un profil de section transversale constant le long d'un axe d'extrusion du joint respectif (100).
